# EUROPEAN PATENT SPECIFICATION

(11) **EP 3 025 386 B1**
(45) Date of publication and mention of the grant of the patent: **12.02.2020**
(21) Application number: 14741919.6
(22) Date of filing: 23.07.2014
(51) Int. Cl.: H01M 2/26, H01M 2/02

(54) **PRISMATIC BUSSING METHOD AND DESIGN**
VERFAHREN FÜR EINE PRISMATISCHE BUSSCHIENE UND ENTWURF
PROCÉDÉ ET CONCEPTION D'INTERCONNEXION PAR BUS PRISMATIQUE

(30) Priority: 25.07.2013 US 201313950742
(43) Date of publication of application: 01.06.2016
(73) Proprietor: SAFT, 93170 Bagnolet (FR)
(72) Inventor: COCHRAN, Steven Dwaine, Midland, Ml 48642 (US); BLOSS, Matthew Carlton, Jacksonville, Florida 32216 (US); BEDSAUL, Randy, Lake Butler, Florida 32054 (US); MARLID, Björn, S-Langrevsgatan 10 (SE)
(74) Representative: Hirsch & Associés
(86) International application number: PCT/EP2014/065832
(87) International publication number: WO 2015/011196

(56) References cited:
- EP-A2- 1 071 153
- US-A1- 2012 121 965

## Description

### FIELD OF THE INVENTION

The invention relates to an electrochemical cell and more particularly to a prismatic electrochemical cell having an improved bussing design and a method of manufacturing such a cell.

### BACKGROUND OF THE INVENTION

There are two types of prismatic cells: wound prismatic cells and stacked prismatic cells. For each design, end leads (typically made of bare foil) of the positive and negative plates are respectively attached to positive and negative bus straps provided on opposite sides of the prismatic cell with the bus straps being disposed substantially parallel to the plane of the prismatic cells. See U.S. Patent Publication No. 2012/0107668. As a result, the length of the end leads is relatively long. Since these end leads are the inactive portion of the cells, the resulting cell is inefficient, both from a performance perspective and a space perspective. US 2012/121965 A1 and EP 1 071 153 A2 show possible designs of end leads and bus straps connections.

### SUMMARY OF THE INVENTION

The invention is defined in claims 1 and 5. A first object of the invention is an electrochemical cell comprising a plurality of prismatic electrode stacks, each prismatic electrode stack having a prismatic plane defined as the largest side of the prismatic electrode stack, the plurality of prismatic electrode stacks being arranged side-by-side such that the prismatic planes are parallel to each other,: each prismatic electrode stack extending in a prismatic plane and having a plurality of positive electrode plates and a plurality of negative electrode plates stacked alternately with intervening separators therebetween. The positive electrode plates and the negative electrode plates are laterally offset so that end leads of the positive electrode plates extend from one side of the electrode stack and end leads of the negative electrode plates extend from an opposite side of the electrode stack. A one-piece positive bus strap common to the plurality of prismatic electrode stacks is joined to the end leads of the positive electrode plates of each stack and a one-piece negative bus strap common to the plurality of prismatic electrode stacks is joined to the end leads of the negative electrode plates of each stack such that said positive and negative bus straps and connecting portions of said end leads of the positive and negative electrode plates are disposed parallel to each other and perpendicular to the prismatic plane of the prismatic electrode stack, whereby said end leads of the positive electrode plates are joined to said one-piece positive bus strap at said connecting portions and said end leads of the negative electrode plates are joined to the one-piece negative bus strap at said connecting portions. The positive and negative bus straps are joined to the respective end leads of the positive and negative electrode plates by welds, wherein each stack has welds separate from the welds of the other stacks. Further, a case is provided for accommodating the prismatic electrode stacks, the bus straps and liquid electrolyte.

A second object of the invention is a method of manufacturing an electrochemical cell, comprising:
(a) providing a prismatic electrode stack, said prismatic electrode stack extending in a prismatic plane, the prismatic plane being defined as the largest side of the prismatic electrode stack, the prismatic electrode stack having a plurality of positive electrode plates and a plurality of negative electrode plates stacked alternately with intervening separators therebetween, the positive electrode plates and the negative electrode plates being laterally offset so that end leads of the positive electrode plates extend from one side of the electrode stack and end leads of the negative electrode plates extend from an opposite side of the electrode stack;
(b) providing a one-piece positive bus strap adjacent the end leads of the positive electrode plates and a one-piece negative bus strap adjacent to the end leads of the negative electrode plates at an orientation such that the bus straps are perpendicular to the prismatic plane;
(c) positioning the end leads of the positive electrode plates such that connecting portions thereof are parallel to and against the one-piece positive bus strap and positioning the end leads of the negative electrode plates such that connecting portions thereof are parallel to against the one-piece negative bus strap;
(d) joining the connecting portions of the positive electrode plates to the one-piece positive bus strap and the connecting portions of the negative electrode plates to the one-piece negative bus strap;
   further comprising providing another prismatic electrode stack adjacent the prismatic electrode stack and arranged side-by-side with the prismatic electrode stack and repeating steps (b) - (d) for the another prismatic electrode stack, the one-piece positive bus strap being common to the prismatic electrode stacks and joined to the end leads of the positive electrode plates and the one-piece negative bus strap being common to the prismatic electrode stacks and joined to the end leads of the negative electrode plates; wherein said joining step comprises welding and wherein each stack has welds separate from the welds of the other stack;
(e) inserting the prismatic electrode stacks, the common positive and negative bus straps and liquid electrolyte in a case.

### BRIEF DESCRIPTION OF THE DRAWINGS

Fig. 1 is perspective view of the prismatic electrode stack connected to positive and negative bus straps according to an exemplary embodiment;
Fig. 2 is a partial cross-sectional view of the electrodes and separators for the electrode stack according to an exemplary embodiment;
Fig. 3 is a detailed view showing the connection between the end portion of the positive or negative electrode plate to the associated positive or negative bus strap according to an exemplary embodiment;
Fig. 4 is a perspective view showing a plurality of prismatic electrode stacks connected to the positive and negative bus straps according to an exemplary embodiment; and
Fig. 5 is a perspective view showing the prismatic electrode stacks being inserted into the case according to an exemplary embodiment.

### DETAILED DESCRIPTION OF THE INVENTION

Embodiments will be described below in more detail with reference to the accompanying drawings. The following detailed descriptions are provided to assist the reader in gaining a comprehensive understanding of the methods, apparatuses, and/or systems described herein.

Moreover, descriptions of well-known functions and constructions may be omitted for increased clarity and conciseness.

The terms used in the description are intended to describe embodiments only, and shall by no means be restrictive. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

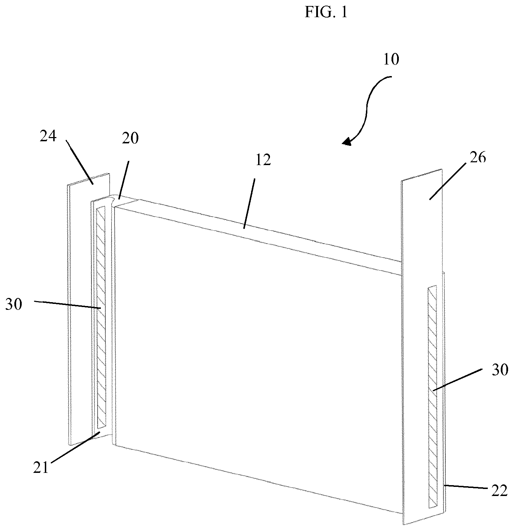

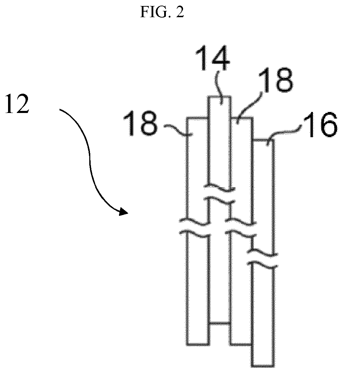

The electrochemical cell 10 according to an embodiment of the invention is illustrated in Fig. 1. The cell 10 includes a prismatic electrode stack 12 extending in a prismatic plane and having a plurality of positive electrode plates 14 and a plurality of negative electrode plates 16 stacked alternately with intervening separators 18 therebetween as shown in Fig. 2. The positive electrode plates 14 and the negative electrode plates 16 are laterally offset so that end leads 20 of the positive electrode plates 14 extend from one side of the electrode stack and end leads 22 of the negative electrode plates 16 extend from an opposite side of the electrode stack.

The end leads 20 of the positive electrode plates 14 are joined to a positive bus strap 24 and the end leads 22 of the negative electrode plates 16 are joined to a negative bus strap 26. That is, according to an exemplary embodiment, the positive and negative bus straps 24, 26 are disposed substantially parallel to each other and perpendicular to the prismatic plane of the prismatic electrode stack 12. In addition, the end leads 20, 22 are arranged such that the connection portions 21 thereof that are joined to the bus straps are parallel to the bus straps to allow them to be joined or welded to the bus straps.

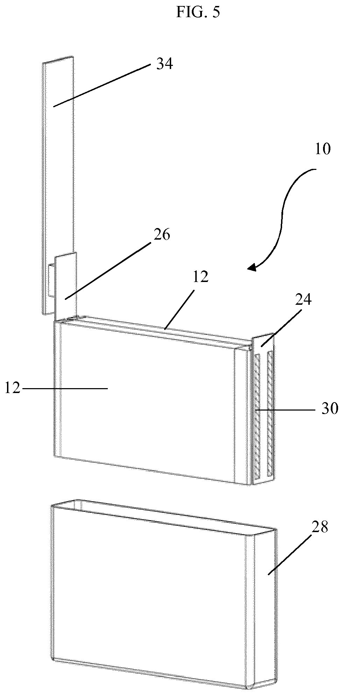

As shown in Fig. 5, a case 28 accommodates the prismatic electrode stack 12, the bus straps 24, 26 and liquid electrolyte.

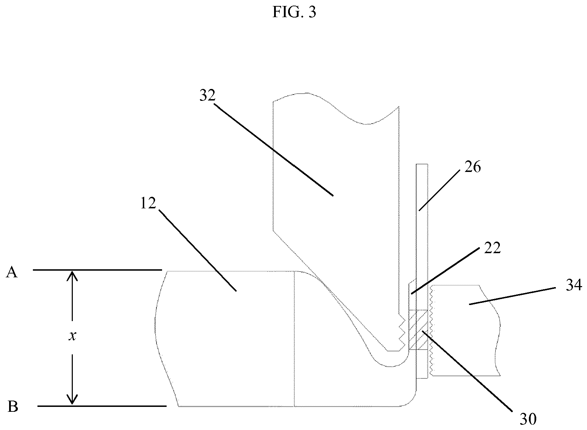

Fig. 3 is a detailed illustration showing the manner in which the bus straps 24, 26 are joined to the end leads 20, 22 of the respective positive and negative electrode plates 14, 16. Each end lead 20, 22 is curved or folded such that the connecting portion 21 thereof is oriented substantially perpendicular to the plane of the electrode stack 12 such that it can be positioned against the associated bus strap 24, 26. Once positioned, the connecting portion 21 of each end lead is welded to the associated bus strap at welds 30 using weld tool 32 and anvil 34.

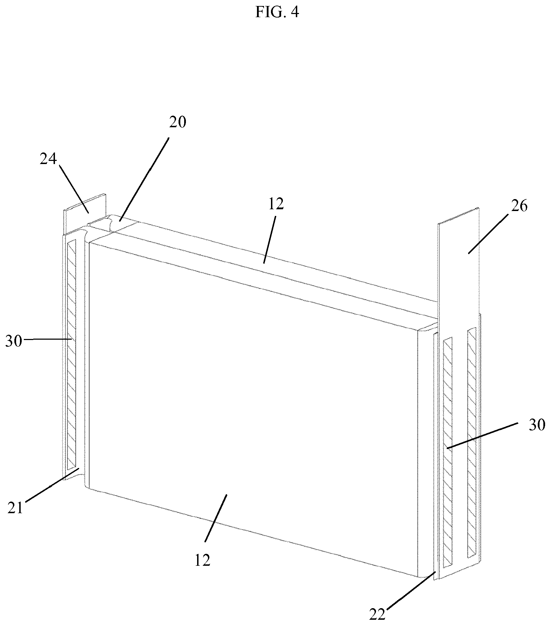

As shown in Fig. 3, the weld 30 is preferably positionally aligned with the lateral end of the electrode stack. That is, the weld is provided in a space x between lines A and B extending from the front and rear sides of the electrode stack 12. As a result, a plurality of electrode stacks 12 can be provided which are adjacent and substantially parallel to each other as shown in Fig. 4.

That is, Fig. 4 illustrates two electrode stacks 12 arranged side-by-side and joined to common positive and negative bus straps 24, 26. The end leads 20 of the positive electrode plates 14 are joined to the positive bus strap 24 and the end leads 22 of the negative electrode plates 16 are joined to the negative bus strap 26. Of course, it should be understood that additional electrode stacks could be provided depending on the design criteria of the electrochemical cell.

Fig. 5 shows the two electrode stacks 12 and associated positive and negative bus straps 24, 26 being inserted into a case 32, with a cover 34.

The present invention is an improvement over the prior art in the following respects. For example, the design is simple and efficient allowing multiple electrode stacks to be electrically connected to each other with minimal manufacturing steps and minimal space. In addition, the non-active area of each electrode plate (i.e., the end leads) is minimized to thereby maximize the electrical efficiency of the cell. Other advantages of the invention would be apparent to a person of ordinary skill in the art.

The following is a description of a method of manufacturing an electrochemical cell according to the present invention.

Having obtained the prismatic electrode stack described above, a positive bus strap 24 is positioned adjacent the side edge portion of the positive electrode plate 14 and a negative bus strap 26 is positioned adjacent to the side edge portion of the negative electrode plate 16 at an orientation such that the bus straps are perpendicular to the prismatic plane.

Then, the end lead 20 of the positive electrode plate 14 is folded or curved such that a connecting portion 21 thereof is positioned parallel to and against the positive bus strap 24 and the end lead 22 of the negative electrode plate 16 is similarly folded or curved such that a connecting portion 21 thereof is positioned parallel to against the negative bus strap 26. Thereafter, the connecting portion 21 of the end lead 20 of the positive electrode plate 14 is joined or welded to the positive bus strap 24 and the connecting portion 21 of the end lead 22 of the negative electrode plate 16 is joined or welded to the negative bus strap 26.

Thereafter, the assembly, including the prismatic electrode stack and the positive and negative bus straps 24, 26, is inserted into a case. The additional electrode stacks are arranged parallel to each other and joined to the positive and negative bus straps in a similar manner and positioned in the case.

## Claims

1. An electrochemical cell (10), comprising a plurality of prismatic electrode stacks (12), each prismatic electrode stack having a prismatic plane defined as the largest side of the prismatic electrode stack, the plurality of prismatic electrode stacks being arranged side-by-side such that the prismatic planes are parallel to each other, each prismatic electrode stack extending in the prismatic plane and having a plurality of positive electrode plates (14) and a plurality of negative electrode plates (16) stacked alternately with intervening separators (18) therebetween, the positive electrode plates and the negative electrode plates being laterally offset so that end leads (20) of the positive electrode plates extend from one side of the electrode stack and end leads (22) of the negative electrode plates extend from an opposite side of the electrode stack;
a one-piece positive bus strap (24) common to the plurality of prismatic electrode stacks and joined to the end leads of the positive electrode plates of each stack and a one-piece negative bus (26) strap common to the plurality of prismatic electrode stacks and joined to the end leads of the negative electrode plates of each stack, wherein said positive and negative bus straps and connecting portions (21) of said end leads of the positive and negative electrode plates are disposed parallel to each other and perpendicular to the prismatic plane of the prismatic electrode stack, whereby said end leads of the positive electrode plates are joined to said one-piece positive bus strap at said connecting portions and said end leads of the negative electrode plates are joined to the one-piece negative bus strap at said connecting portions; **characterized in that** the positive and negative bus straps are joined to the respective end leads of the positive and negative electrode plates by welds (30), wherein each stack has welds separate from the welds of the other stacks and
a case (28) accommodating the prismatic electrode stacks, the bus straps and liquid electrolyte.

2. The electrochemical cell of claim 1, wherein said end leads (20, 22) of the positive and negative electrode plates include bare foil edges that are curved 90 degrees.

3. The electrochemical cell of claim 2, wherein the welds (30) are positionally aligned with the lateral ends of the electrode stack.

4. The electrochemical cell of claim 1, wherein the prismatic electrode stacks are adjacent through their largest side.

5. A method of manufacturing an electrochemical cell (10), comprising:
(a) providing a prismatic electrode stack (12), said prismatic electrode stack extending in a prismatic plane, the prismatic plane being defined as the largest side of the prismatic electrode stack, the prismatic electrode stack having a plurality of positive electrode plates (14) and a plurality of negative electrode plates (16) stacked alternately with intervening separators (18) therebetween, the positive electrode plates and the negative electrode plates being laterally offset so that end leads (20) of the positive electrode plates extend from one side of the electrode stack and end leads (22) of the negative electrode plates extend from an opposite side of the electrode stack;
(b) providing a one-piece positive bus strap (24) adjacent the end leads of the positive electrode plates and a one-piece negative bus strap (26) adjacent to the end leads of the negative electrode plates at an orientation such that the bus straps are perpendicular to the prismatic plane;
(c) positioning the end leads of the positive electrode plates such that connecting portions (21) thereof are parallel to and against the one-piece positive bus strap and positioning the end leads of the negative electrode plates such that connecting portions thereof are parallel to against the one-piece negative bus strap;
(d) joining the connecting portions of the positive electrode plates to the one-piece positive bus strap and the connecting portions of the negative electrode plates to the one-piece negative bus strap;
further comprising providing another prismatic electrode stack adjacent the prismatic electrode stack and arranged side-by-side with the prismatic electrode stack and repeating steps (b) - (d) for the another prismatic electrode stack, the one-piece positive bus strap (24) being common to the prismatic electrode stacks and joined to the end leads of the positive electrode plates and the one-piece negative bus (26) strap being common to the prismatic electrode stacks and joined to the end leads of the negative electrode plates; wherein said joining step comprises welding and wherein each stack has welds separate from the welds of the other stack;
(e) inserting the prismatic electrode stacks, the common positive and negative bus straps and liquid electrolyte in a case (28).

## Patentansprüche

1. Elektrochemische Zelle (10), umfassend eine Vielzahl von prismatischen Elektrodenstapeln (12), wobei jeder prismatische Elektrodenstapel eine prismatische Ebene aufweist, die als die größte Seite des prismatischen Elektrodenstapels definiert ist, wobei die Vielzahl von prismatischen Elektrodenstapeln nebeneinander angeordnet ist, sodass die prismatischen Ebenen parallel zueinander sind, wobei sich jeder prismatische Elektrodenstapel in der prismatischen Ebene erstreckt und eine Vielzahl von positiven Elektrodenplatten (14) und eine Vielzahl von negativen Elektrodenplatten (16) aufweist, die abwechselnd mit dazwischenliegenden Separatoren (18) gestapelt sind, wobei die positiven Elektrodenplatten und die negativen Elektrodenplatten seitlich versetzt sind, sodass sich die Endleitungen (20) der positiven Elektrodenplatten von einer Seite des Elektrodenstapels erstrecken und die Endleitungen (22) der negativen Elektrodenplatten von einer gegenüberliegenden Seite des Elektrodenstapels ausgehen;
ein einteiliges positives Busband (24), das der Vielzahl von prismatischen Elektrodenstapeln gemeinsam ist und mit den Endleitungen der positiven Elektrodenplatten jedes Stapels verbunden ist, und ein einteiliges negatives Busband (26), das der Vielzahl von prismatischen Elektrodenstapeln gemeinsam ist und mit den Endleitungen der negativen Elektrodenplatten jedes Stapels verbunden ist, wobei die positiven und negativen Busbänder und Verbindungsabschnitte (21) der Endleitungen der positiven und negativen Elektrodenplatten parallel zueinander und senkrecht zur prismatischen Ebene des prismatischen Elektrodenstapels angeordnet sind, wodurch die Endleitungen der positiven Elektrodenplatten mit dem einteiligen positiven Busband an den Verbindungsabschnitten und die Endleitungen der negativen Elektrodenplatten mit dem einteiligen negativen Busband an den Verbindungsabschnitten verbunden sind; **dadurch gekennzeichnet, dass** die positiven und negativen Busbänder mit den jeweiligen Endleitungen der positiven und negativen Elektrodenplatten durch Schweißnähte (30) verbunden sind, wobei jeder Stapel von den Schweißnähten der anderen Stapel getrennte Schweißnähte aufweist und ein Gehäuse (28), das die prismatischen Elektrodenstapel, die Busbänder und den flüssigen Elektrolyten aufnimmt.

2. Elektrochemische Zelle nach Anspruch 1, wobei die Endleitungen (20, 22) der positiven und negativen Elektrodenplatten blanke Folienränder aufweisen, die um 90 Grad gekrümmt sind.

3. Elektrochemische Zelle nach Anspruch 2, worin die Schweißnähte (30) in ihrer Position zu den seitlichen Enden des Elektrodenstapels ausgerichtet sind.

4. Elektrochemische Zelle nach Anspruch 1, worin die prismatischen Elektrodenstapel durch ihre größte Seite benachbart sind.

5. Verfahren zur Herstellung einer elektrochemischen Zelle (10), umfassend:
(a) Bereitstellen eines prismatischen Elektrodenstapels (12), wobei sich der prismatische Elektrodenstapel in einer prismatischen Ebene erstreckt, wobei die prismatische Ebene als die größte Seite des prismatischen Elektrodenstapels definiert ist, wobei der prismatische Elektrodenstapel eine Vielzahl von positiven Elektrodenplatten (14) und eine Vielzahl von negativen Elektrodenplatten (16) aufweist, die abwechselnd mit dazwischen liegenden Separatoren (18) gestapelt sind, wobei die positiven Elektrodenplatten und die negativen Elektrodenplatten seitlich versetzt sind, sodass sich die Endleitungen (20) der positiven Elektrodenplatten von einer Seite des Elektrodenstapels und die Endleitungen (22) der negativen Elektrodenplatten von einer gegenüberliegenden Seite des Elektrodenstapels erstrecken;
(b) Bereitstellen eines einteiligen positiven Busbandes (24), das benachbart zu den Endleitungen der positiven Elektrodenplatten ist, und eines einteiligen negativen Busbandes (26), das benachbart zu den Endleitungen der negativen Elektrodenplatten in einer solchen Ausrichtung ist, dass die Busbänder senkrecht zur prismatischen Ebene stehen;
(c) Positionieren der Endleitungen der positiven Elektrodenplatten, sodass deren Verbindungsabschnitte (21) parallel zu und gegen das einteilige positive Busband sind, und Positionieren der Endleitungen der negativen Elektrodenplatten, so dass deren Verbindungsabschnitte parallel zu dem einteiligen negativen Busband sind;
(d) Verbinden der Verbindungsabschnitte der positiven Elektrodenplatten mit dem einteiligen positiven Busband und der Verbindungsabschnitte der negativen Elektrodenplatten mit dem einteiligen negativen Busband;
ferner umfassend das Bereitstellen eines weiteren prismatischen Elektrodenstapels angrenzend an den prismatischen Elektrodenstapel, der nebeneinander mit dem prismatischen Elektrodenstapel angeordnet ist, und Wiederholen der Schritte (b) - (d) für den anderen prismatischen Elektrodenstapel, wobei das einteilige positive Busband (24) den prismatischen Elektrodenstapeln gemeinsam ist und mit den Endleitungen der positiven Elektrodenplatten verbunden ist und das einteilige negative Busband (26) gemeinsam mit den prismatischen Elektrodenstapeln und mit den Endleitungen der negativen Elektrodenplatten verbunden ist; wobei der Verbindungsschritt das Schweißen umfasst und wobei jeder Stapel von den Schweißnähten des anderen Stapels getrennte Schweißnähte aufweist;
(e) Einsetzen der prismatischen Elektrodenstapel, der gemeinsamen positiven und negativen Busbänder und des flüssigen Elektrolyten in ein Gehäuse (28).

## Revendications

1. Elément électrochimique (10), comprenant une pluralité d'empilages d'électrodes prismatiques (12), chaque empilage d'électrodes prismatique ayant un plan prismatique défini en tant que côté le plus grand de l'empilage d'électrodes prismatique, la pluralité d'empilages d'électrodes prismatiques étant agencés côte-à-côte de sorte que les plans prismatiques soient parallèles les uns aux autres, chaque empilage d'électrodes prismatique s'étendant dans le plan prismatique et comportant une pluralité de plaques d'électrode positive (14) et une pluralité de plaques d'électrode négative (16) empilées alternativement avec des séparateurs intermédiaires (18) entre elles, les plaques d'électrode positive et les plaques d'électrode négative étant décalées latéralement de sorte que les conducteurs d'extrémité (20) des plaques d'électrode positive s'étendent à partir d'un côté de l'empilage d'électrodes et que les conducteurs d'extrémité (22) des plaques d'électrode négative s'étendent à partir d'un côté opposé de l'empilage d'électrodes ;
une attache de bus positif en une seule pièce (24) commune à la pluralité d'empilages d'électrodes prismatiques et directement jointe aux conducteurs d'extrémité des plaques d'électrode positive de chaque empilage et une attache de bus négatif en une seule pièce (26) commune à la pluralité d'empilages d'électrodes prismatiques et directement jointe aux conducteurs d'extrémité des plaques d'électrode négative de chaque empilage, dans laquelle lesdites attaches de bus positif et négatif et les parties de connexion (21) desdits conducteurs d'extrémité des plaques d'électrode positive et négative sont disposées parallèlement les unes aux autres et perpendiculairement au plan prismatique de l'empilage d'électrodes prismatique, moyennant quoi lesdits conducteurs d'extrémité des plaques d'électrode positive sont joints à ladite attache de bus positif en une seule pièce au niveau desdites parties de connexion et lesdits conducteurs d'extrémité des plaques d'électrode négative sont joints à ladite attache de bus négatif en une seule pièce au niveau desdites parties de connexion ; **caractérisée en ce que** les attaches de bus positif et négatif sont jointes aux conducteurs d'extrémité respectifs des plaques d'électrode positive et négative par des soudures (30), dans laquelle chaque empilage comporte des soudures séparées des soudures des autres empilages, et
un boîtier (28) logeant les empilages d'électrodes prismatiques, les attaches de bus et un électrolyte liquide.

2. Elément électrochimique selon la revendication 1, dans lequel lesdits conducteurs d'extrémité (20, 22) des plaques d'électrode positive et négative comprennent des bords de feuille nue qui sont incurvées de 90 degrés.

3. Elément électrochimique selon la revendication 2, dans lequel les soudures (30) sont alignées en position avec les extrémités latérales de l'empilage d'électrodes.

4. Element électrochimique selon la revendication 1, dans lequel les empilages d'électrodes prismatiques sont adjacentes par l'intermédiaire de leur côté le plus grand.

5. Procédé de fabrication d'un élément électrochimique (10), comprenant :
(a) la fourniture d'un empilage d'électrodes prismatique (12), ledit empilage d'électrodes prismatique s'étendant dans un plan prismatique, le plan prismatique étant défini en tant que côté le plus grand de l'empilage d'électrodes prismatique, l'empilage d'électrodes prismatique comportant une pluralité de plaques d'électrode positive (14) et une pluralité de plaques d'électrode négative (16) empilées alternativement avec des séparateurs intermédiaires (18) entre elles, les plaques d'électrode positive et les plaques d'électrode négative étant décalées latéralement de sorte que les conducteurs d'extrémité (20) des plaques d'électrode positive s'étendent à partir d'un côté de l'empilage d'électrodes et que les conducteurs d'extrémité (22) des plaques d'électrode négative s'étendent à partir d'un côté opposé de l'empilage d'électrodes ;
(b) la fourniture d'une attache de bus positif en une seule pièce (24) adjacente aux conducteurs d'extrémité des plaques d'électrode positive et d'une attache de bus négatif en une seule pièce (26) adjacente aux conducteurs d'extrémité des plaques d'électrode négative selon une orientation telle que les attaches de bus sont perpendiculaires au plan prismatique ;
(c) le positionnement des conducteurs d'extrémité des plaques d'électrode positive de sorte que les parties de connexion (21) de ceux-ci soient parallèles à et contre l'attache de bus positif en une seule pièce et le positionnement des conducteurs d'extrémité des plaques d'électrode négative de sorte que les parties de connexion de ceux-ci soient parallèles à et contre l'attache de bus négatif en une seule pièce ;
(d) la jonction des parties de connexion des plaques d'électrode positive à l'attache de bus positif en une seule pièce et des parties de connexion des plaques d'électrode négative à l'attache de bus négatif en une seule pièce ;
comprenant en outre la fourniture d'un autre empilage d'électrodes prismatique adjacent à l'empilage d'électrodes prismatique et agencé côte-à-côte avec l'empilage d'électrodes prismatique et la répétition des étapes (b) à (d) pour ledit un autre empilage d'électrodes prismatique, l'attache de bus positif en une seule pièce (24) étant commune aux empilages d'électrodes prismatiques et jointe aux conducteurs d'extrémité des plaques d'électrode positive et l'attache de bus négatif en une seule pièce (26) étant commune aux empilages d'électrodes prismatiques et jointe aux conducteurs d'extrémité des plaques d'électrode négative ; dans lequel ladite étape de jonction comprend un soudage et dans lequel chaque empilage a des soudures séparées des soudures de l'autre empilage ;
(e) l'insertion des empilages d'électrodes prismatiques, des attaches de bus positif et négatif communes et de l'électrolyte liquide dans un boîtier (28).
